**Europäisches Patentamt**

**European Patent Office**

**Office européen des brevets**

(11) Numéro de publication : **0 374 027 B1**

# (12) FASCICULE DE BREVET EUROPEEN

(45) Date de publication du fascicule du brevet :
**26.08.92 Bulletin 92/35**

(51) Int. Cl.$^5$ : **G01P 5/00**

(21) Numéro de dépôt : **89403421.4**

(22) Date de dépôt : **11.12.89**

(54) **Anémomètre laser à plusieurs directions de mesure.**

(30) Priorité : **15.12.88 FR 8816534**

(43) Date de publication de la demande :
**20.06.90 Bulletin 90/25**

(45) Mention de la délivrance du brevet :
**26.08.92 Bulletin 92/35**

(84) Etats contractants désignés :
**DE ES FR GB IT**

(56) Documents cités :
**EP-A- 0 009 533**
**EP-A- 0 112 188**
**US-A- 4 063 814**

(73) Titulaire : **SEXTANT AVIONIQUE S.A.**
**5/7 rue Jeanne Braconnier Parc Tertiaire**
**F-92366 Meudon la Forêt Cédex (FR)**

(72) Inventeur : **Combe, Hubert**
**Cros de Biguet**
**07130 Toulaud (FR)**
Inventeur : **Morbieu, Bertrand**
**20 rue Freysinet**
**F-26000 Valence (FR)**

(74) Mandataire : **Bloch, Gérard et al**
**2, square de l'Avenue du Bois**
**F-75116 Paris (FR)**

EP 0 374 027 B1

**Description**

La présente invention a pour objet un anémomètre de mesure de la vitesse de déplacement d'un ensemble de particules en suspension dans l'air, comprenant :

– un laser émettant un faisceau incident sur lesdites particules, qui le réfléchissent partiellement pour donner naissance à un faisceau réfléchi,

– des moyens de mesure de l'écart de fréquence, induit par ladite vitesse, entre ledit faisceau réfléchi et ledit faisceau incident, et,

– des moyens pour faire varier la direction dudit faisceau incident.

Un tel anémomètre permet notamment, lorsqu'il est monté sur un avion, la mesure, à distance, de la vitesse du déplacement de l'air calme relativement à l'avion, c'est-à-dire de la vitesse propre de l'avion par rapport à l'air calme. Son principe de fonctionnement est basé sur le phénomène connu sous le nom d"effet Doppler".

On connaît déjà des anémomètres du type défini ci-dessus, ne comportant pas de moyens de déplacement du faisceau incident dans l'espace ou comportant un système de balayage conique continu (EP-A-0 009 553).

Pour un anémomètre à faisceau fixe, le volume dans lequel est mesurée la vitesse relative des particules est un volume allongé s'étendant sensiblement le long de l'axe du faisceau incident, et c'est, en fait, la projection de la vitesse relative sur cet axe qui se trouve mesurée. L'information délivrée par un tel anémomètre est donc partielle, puisqu'elle ne concerne qu'une composante de la vitesse relative à mesurer.

Pour pallier en partie cet inconvénient, on peut prévoir des moyens pour faire varier la direction du faisceau incident. Par exemple, il est connu d'utiliser un prisme interceptant le faisceau incident, et monté pivotant autour d'un axe perpendiculaire à sa face d'entrée, axe confondu avec l'axe du faisceau incident. Au repos, le faisceau incident est donc dévié par le prisme. Lorsque le prisme est entraîné en rotation, le faisceau incident balaye un cône, ce qui permet de faire des mesures dans différentes directions. Toutefois, le demi-angle au sommet du cône balayé reste faible. Il en résulte que la précision obtenue sur les composantes transversales de la vitesse relative est faible. De plus, la mesure de la vitesse, dans une direction donnée, n'est pas instantanée. Il est donc nécessaire, soit d'entraîner le prisme de façon intermittente, en le laissant à l'arrêt pendant la durée de chaque mesure, soit de l'entraîner de façon continue, mais à vitesse assez lente. Dans les deux cas, cela impose un compromis entre la rapidité et la précision des mesures. De plus, un tel anémomètre n'est pas très facile à installer sur un avion, dans la mesure où, s'il ne pouvait être installé à l'extrémité du nez de l'avion, il nécessiterait de prévoir une fenêtre transparente au faisceau laser, en forme de couronne verticale faisant le tour du fuselage, pour laisser le passage au faisceau laser balayant le cône d'axe sensiblement horizontal. Ceci ne paraît pas raisonnablement réalisable.

La présente invention vise à pallier les inconvénients précédents, en procurant un anémomètre autorisant des mesures rapides et précises dans des directions différentes, pouvant former entre elles des angles importants, afin de connaître avec une bonne précision toutes les composantes de la vitesse, cet anémomètre étant, de plus, facile à installer sur un avion.

A cet effet, la présente invention a pour objet un anémomètre du type défini ci-dessus, caractérisé par le fait que :

- lesdits moyens pour faire varier la direction dudit faisceau incident comprennent des moyens d'interception dudit faisceau incident, en partie transparents, et en partie réfléchissants, entraînés en mouvement permanent pour se déplacer, dans un plan fixe, perpendiculairement audit faisceau incident au point d'interception, ledit faisceau incident empruntant en conséquence au moins deux trajets successifs, et,

- il est prévu des moyens de commande desdits moyens de mesure, et du mouvement desdits moyens d'interception, pour que soit effectuée au moins une mesure pendant que ledit faisceau incident emprunte chacun desdits trajets successifs.

L'anémomètre de l'invention permet de mesurer les composantes de la vitesse dans au moins deux directions. En effet, bien que le mouvement des moyens d'interception soit permanent, les changements de direction du faisceau incident sont brusques, et la direction de celui-ci reste fixe entre deux changements, du fait que le mouvement s'effectue toujours dans le même plan fixe. Du fait que ce mouvement s'effectue, de plus, perpendiculairement au faisceau incident, ce mouvement n'introduit pas de perturbation dans les mesures. S'il n'en était pas ainsi, c'est-à-dire si le mouvement des moyens d'interception, vu par le faisceau incident, avait une composante parallèle à l'axe du faisceau, celle-ci serait, suite à l'effet Doppler, à l'origine d'une fréquence parasite dûe à la rétrodiffusion sur les optiques constituant les moyens d'interception. Dans l'anémomètre de l'invention, le faisceau incident emprunte donc plusieurs trajets successifs discrets et de direction déterminée. En commandant le mouvement des moyens d'interception à une vitesse telle que le temps pendant lequel le faisceau incident emprunte un des trajets soit sensiblement égal au temps nécessaire pour faire une mesure, il est donc possible de faire rapidement des mesures précises, puisque le faisceau reste fixe pendant la durée d'une mesure.

Du fait que les directions des trajets successifs empruntés par le faisceau incident sont fixes, l'installation de l'anémomètre de l'invention dans le nez de l'avion se trouve facilitée. En effet, il suffit de prévoir deux, ou respectivement trois, fenêtres dans le fuselage, selon que les directions successives des trajets sont au nombre de deux, ou respectivement trois, pour laisser passer le faisceau incident. Cela est beaucoup plus réaliste à envisager qu'une unique fenêtre en forme de couronne autour du fuselage.

Avantageusement, lesdits moyens d'interception comprennent au moins un premier disque d'axe coupant l'axe dudit faisceau incident, ledit disque étant entraîné en rotation permanente autour de son axe et pourvu d'au moins un premier secteur transparent et d'au moins un premier secteur réfléchissant.

Dans ce cas, la forme de réalisation est particulièrement simple, les changements de trajet du faisceau incident étant obtenus par réflexion ou traversée de secteurs respectivement réfléchissants ou transparents d'un disque entraîné en rotation continue et permanente. Il est important de noter la caractéristique selon laquelle l'axe du disque tournant coupe l'axe du faisceau incident. C'est en effet grâce à cette caractéristique que le déplacement de la surface du disque, au voisinage du point où elle intercepte le faisceau incident, est perpendiculaire à l'axe du faisceau incident.

Avantageusement, ledit premier secteur transparent est de 240°, le dit premier secteur réfléchissant est de 120°, et il est prévu un deuxième disque de même axe que ledit premier disque et solidaire de celui-ci, interceptant ledit faisceau incident après que celui-ci a traversé ledit premier secteur transparent et pourvu d'un deuxième secteur transparent de 120° et d'un deuxième secteur réfléchissant de 120° qui font face audit premier secteur transparent, ledit faisceau incident empruntant en conséquence trois trajets successifs.

Dans ce cas, le faisceau incident emprunte trois trajets successifs, pendant des durées égales entre elles et égales au tiers de la période de rotation des disques. Il est facile, grâce à des miroirs réfléchissants, de diriger ces trajets dans les directions des trois axes d'un repère, à l'intérieur duquel on mesure ainsi successivement les trois composantes de la vitesse à mesurer.

Avantageusement, lesdits premier et deuxième disques sont les deux bases d'un cylindre en matériau transparent à la longueur d'onde dudit laser, lesdits premier et deuxième secteurs réfléchissants étant obtenus par dépôt d'une couche de matériau réfléchissant sur lesdites bases.

Une telle forme de réalisation permet d'assurer simplement un parallélisme rigoureux entre les deux disques.

Avantageusement encore, il est prévu des moyens réfléchissants sur chacun desdits trajets successifs du faisceau incident pour diriger ceux-ci selon des directions orthogonales deux à deux.

Le repère de mesure est, dans ce cas, un repère trirectangle.

La présente invention sera mieux comprise à la lecture de la description de la forme de réalisation préférée, et d'une de ses variantes, de l'anémomètre de l'invention, faite en se référant aux dessins annexés, sur lesquels :

– la figure 1 représente un schéma par blocs de l'anémomètre de l'invention,

– la figure 2 représente un schéma détaillé du dispositif de mesure de l'anémomètre de la figure 1,

– la figure 3 représente une vue de côté des disques tournants mis en oeuvre dans le dispositif pour faire varier la direction du faisceau incident de l'anémomètre de la figure 1,

– la figure 4 représente une variante de réalisation des disques tournants de la figure 3,

– la figure 5 représente la disposition des secteurs transparents et réfléchissants sur les disques tournants des figures 3 et 4,

– la figure 6 est une vue de face du dispositif pour faire varier la direction du faisceau incident de l'anémomètre de la figure 1,

– la figure 7 est une vue de dessus du dispositif de la figure 6,

– la figure 8 est une vue de gauche du dispositif de la figure 6, et,

– la figure 9 est une vue en perspective du dispositif de la figure 6.

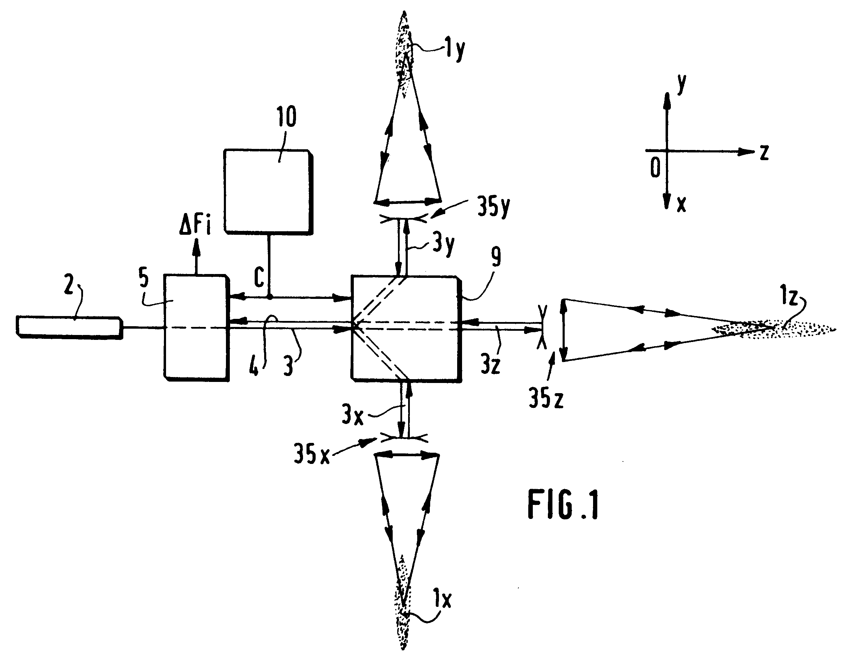

En se référant à la figure 1, un anémomètre laser est maintenant décrit. Cet anémomètre est embarqué à bord d'un aéronef, comme un avion ou un hélicoptère, pour mesurer à distance la vitesse de déplacement d'un volume d'air relativement à l'aéronef. Si la distance entre l'aéronef et ce volume d'air est suffisante, cette vitesse est la vitesse relative de l'avion par rapport à l'air calme, c'est-à-dire l'air non perturbé par le passage de l'aéronef. La connaissance de cette vitesse est utile, notamment pour le pilotage de l'aéronef.

En pratique, l'anémomètre mesure, en mettant en oeuvre l'effet Doppler, la vitesse des particules en suspension dans le volume d'air dont la vitesse est à mesurer.

A cet effet, il comprend un laser 2 émettant un faisceau incident 3. Le laser 2 est, ici et par exemple, un laser à $CO_2$ émettant un rayonnement infra-rouge de longueur d'onde 10,6 µm.

Après passage dans un dispositif de mesure 5, qui sera mieux décrit dans la suite, le faisceau incident 3 pénètre dans un dispositif 9 permettant de faire varier sa direction.

Le dispositif 9 pour faire varier la direction du faisceau incident 3 sera mieux décrit dans la suite.

Toutefois, on peut d'ores et déjà le considérer comme un dispositif de commutation optique qui permet de faire emprunter successivement plusieurs trajets différents au faisceau incident 3. Ces trajets sont ici les trajets 3x, 3y et 3z, parallèles aux trois axes d'un trièdre trirectangle Ox y z. Sur la figure 1, l'axe Oz est parallèle au plan de la figure, tandis que les axes Ox et Oy forment avec ce plan des angles de 45° et 135°.

Lorsque le faisceau incident 3 emprunte le trajet 3x, par example, il rencontre une optique 35x de focalisation sur un volume d'air contenant des particules 1x en suspension. L'optique 35x comprend, de façon connue, un système divergent suivi d'un système convergent agencés pour que le volume de mesure soit un ellipsoïde assez allongé disposé dans le prolongement du trajet 3x, à une distance déterminée de l'optique 35x.

Les particules 1x réfléchissent partiellement le faisceau incident 3, ce qui donne naissance à un faisceau réfléchi 4 qui emprunte le même trajet que le faisceau incident 3, mais en sens inverse.

De façon connue, et à cause de l'effet Doppler, la fréquence du faisceau réfléchi 4 diffère de celle du faisceau incident 3 d'une quantité, ou écart de fréquence, induite par la composante selon Ox de la vitesse de déplacement des particules 1x. Le valeur de cet écart de fréquence $\Delta Fx$ vaut :

$$\Delta Fx = 2\, Vx/\lambda \quad (1)$$

Vx étant la composante, selon Ox, de la vitesse des particules 1x, et
$\lambda$ étant la longueur d'onde du rayonnement du faisceau incident.

Le dispositif de mesure 5 permet de mesurer l'écart de fréquence $\Delta Fx$ entre le faisceau réfléchi 4 et le faisceau incident 3.

Sur les trajets 3y et 3z sont disposées des optiques 35y et 35z, respectivement, focalisées sur des volumes de particules 1y et 1z respectivement.

Un circuit électronique 10 commande, par l'intermédiaire d'un signal C, le dispositif 9 de commutation optique, afin que le faisceau incident 3 emprunte successivement les trajets 3x, 3y et 3z, et ainsi de suite. Le circuit électronique 10 commande également le dispositif de mesure 5 pour que soit effectuée une mesure de chacun des écarts de fréquence $\Delta Fx$, $\Delta Fy$ et $\Delta Fz$ obtenus pendant que le faisceau incident emprunte chacun des trajets 3x, 3y et 3z, respectivement. Ainsi se trouvent mesurées successivement les trois composantes Vx, Vy et Vz de la vitesse V à mesurer. Ici, le temps nécessaire au dispositif de mesure pour effectuer une mesure comme $\Delta Fx$ est de l'ordre de 16 ms.

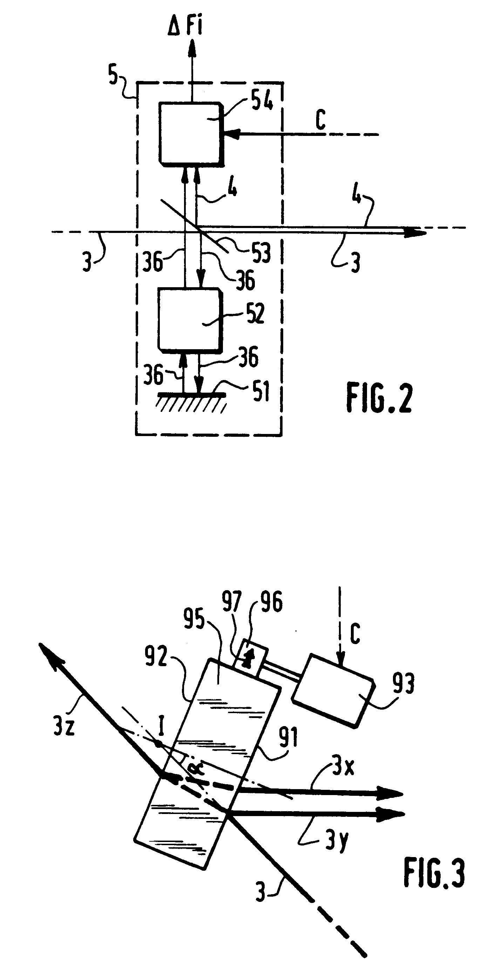

En référence maintenant à la figure 2, le dispositif de mesure 5 comprend, de façon connue, et disposés dans cet ordre perpendiculairement au faisceau incident 3, un miroir 51, un modulateur acousto-optique 52, une lame semi-réfléchissante 53 interceptant le faisceau incident 3, et un circuit de détection 54.

La lame semi-réfléchissante 53 réfléchit une partie 36 du faisceau incident 3, de fréquence $F_I$ vers le modulateur acousto-optique 52 et le miroir 51. Le modulateur acousto-optique 52 comprend un transducteur piézoélectrique excité à une fréquence $F_M$, et le miroir 51 est disposé pour réfléchir sur elle-même la partie 36 du faisceau incident qui a traversé le modulateur 52. Ainsi, après sa deuxième traversée du modulateur 52, la partie 36 du faisceau incident 3 comprend notamment la fréquence $F_{OL}$ :

$$F_{OL} = F_I + 2\, F_M \quad (2)$$

Cette partie 36 est reçue par le circuit de détection 54, qui reçoit également, renvoyé par la lame semi-réfléchissante 53, le faisceau réfléchi 4 de fréquence :

$$F_R = F_I + \Delta Fi \quad (3)$$

avec i = x, y ou z.

Le circuit de détection 54 comprend, de façon connue, une photodiode sensible dans l'infra-rouge, suivie des circuits de filtrage et de traitement pour mesurer la différence :

$$F_{OL} - F_R = 2\, F_M - \Delta Fi$$

On note que, de façon connue, le modulateur acousto-optique 52, à l'origine du terme $2\, F_M$, permet de déterminer le signe de l'écart de fréquence $\Delta Fi$. Le circuit 54 délivre un signal représentatif de l'écart $\Delta Fi$, donc de la composante Vi.

En référence maintenant à la figure 3, la partie mobile du dispositif 9 de commutation optique est maintenant décrite. Elle comprend principalement ici un cylindre 95 circulaire en matériau transparent à la longueur d'onde du faisceau 3, par example du germanium ou du séléniure de zinc. Le cylindre 95 est monté pivotant autour de son axe et entraîné en rotation, par un moteur 93, commandé par le signal C, grâce à un galet 96. L'axe du cylindre 95 coupe l'axe du faisceau incident en un point I, disposé ici en aval du point où le cylindre intercepte le faisceau incident 3. Les deux axes forment ici un angle $\alpha$ approximativement égal à 30°.

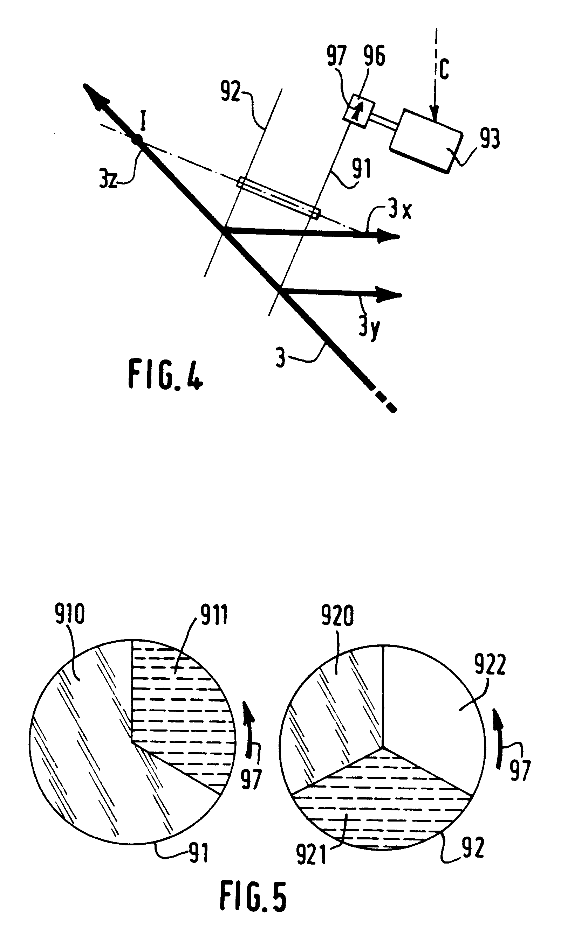

Les deux bases 91 et 92 du cylindre 95 comprennent, comme le montre la figure 5, chacune un secteur réfléchissant 911 et 921, respectivement, et chacune un secteur transparent 910 et 920, respectivement. Les secteurs réfléchissants 911 et 921, de 120°, sont obtenus par dépôt d'une couche mince de matériau réfléchissant sur les bases 91 et 92, respectivement. Les secteurs transparents 910 et 920, de 240° et 120° respectivement, ont subi un traitement anti-reflets.

On peut dire que les faces 91 et 92 du cylindre forment deux disques de même axe solidaires l'un de l'autre. Le disque 91 est celui qui intercepte le premier le faisceau incident 3, et le disque 92 intercepte ce faisceau incident 3 seulement après que celui-ci a traversé le secteur transparent 910 du disque 91. Les secteurs transparent 920 et réfléchissant 921 du disque 92 sont disposés pour faire face au secteur transparent 910 du disque 91. La nature du secteur 922 de 120° qui fait face au secteur 911 est indifférente. Il résulte de l'agencement précédent que, pendant un premier tiers de tour du cylindre 95 où le secteur réfléchissant 911 intercepte le faisceau incident 3, celui-ci est réfléchi et emprunte un premier trajet 3y. Ensuite, pendant les deux autres tiers du tour du cylindre 95 où le secteur réfléchissant 910 laisse passer le faisceau incident 3, celui-ci pénètre dans le cylindre 95 et se trouve intercepté par le disque 92.

Pendant le deuxième tiers de tour, compte tenu du sens de rotation indiqué ici par les flèches 97, le faisceau 3 est intercepté par le secteur réfléchissant 921, et il ressort finalement du cylindre 95, par la face 91, selon le trajet 3x, parallèle au trajet 3y, mais distinct de celui-ci, puisque l'axe du faisceau incident 3 est incliné relativement à l'axe du cylindre 95.

Pendant le troisième tiers de tour, le secteur transparent 920 laisse passer le faisceau 3, qui sort du cylindre 95 par la face 92, et emprunte donc le trajet 3z.

Le faisceau incident 3 emprunte donc successivement les trois trajets distincts 3y, 3x, et 3z, ici dans cet ordre. Le cylindre 95 est entraîné à 20 tours par seconde. Ainsi, chaque trajet est emprunté pendant les 16 ms nécessaires à la mesure.

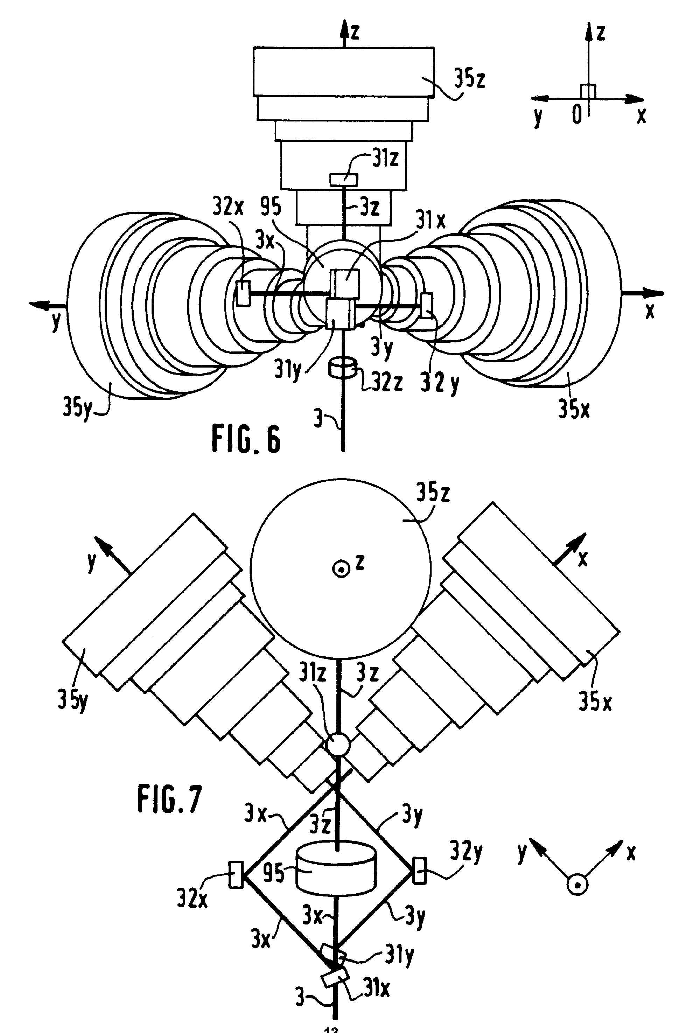

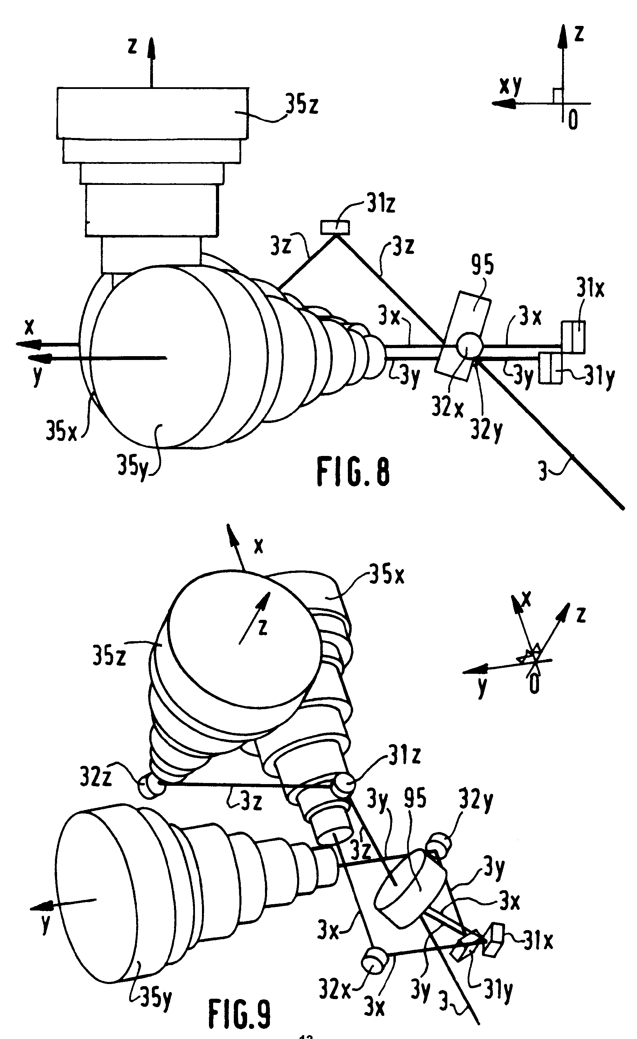

Tels qu'ils apparaissent sur la figure 3, les trajets 3x, 3y et 3z, s'ils sont distincts, ne sont pas dirigés selon des directions nécessairement propices, telles quelles, à la mesure de plusieurs composantes de la vitesse, puisque les trajets 3x et 3y sont parallèles, et forment un angle de sensiblement 120° avec le trajet 3z. En référence aux figures 6, 7, 8 et 9, est décrit maintenant un agencement de miroirs 31x, 32x, 31y, 32y, 31z et 32z qui permet de diriger les trois trajets 3x, 3y et 3y selon des directions Ox, Oy et Oz, ici orthogonales deux à deux, et permettant donc la mesure des trois composantes de la vitesse dans un repère trirectangle.

La figure 6 représente une vue de face du dispositif 9 de commutation du faisceau incident, représenté en totalité. Sur la figure 6, l'axe Oz est vertical, dans le plan de la figure, et il est dirigé vers le haut; l'axe Ox est horizontal, forme des angles de 45° et 135° avec le plan de la figure, et il est dirigé vers la droite en s'éloignant du plan de la figure; enfin l'axe Ox est horizontal, forme des angles de 135 et 45° avec le plan de la figure, et il est dirigé vers la gauche en s'éloignant du plan de la figure.

La figure 7 et la figure 8 sont respectivement une vue de dessus et une vue de gauche du dispositif de la figure 6, tandis que la figure 9 est une vue en perspective depuis un point de vue situé "à gauche", et "dessus", ces expressions ayant le même sens que pour les figures 7 et 8.

Sur la figure 8, le faisceau incident 3 et le cylindre 95 sont représentés dans leur position de la figure 3, où les trajets 3x et 3y sont horizontaux au sortir du cylindre 95, et parallèles au plan de la figure.

Le trajet 3x est d'abord dirigé par un miroir 31x selon la direction Oy, puis par un miroir 32x selon la direction Ox, comme le montre la figure 7. Il pénètre ensuite dans l'optique de focalisation 35x déjà décrite dans son principe.

Le trajet 3y, parallèle au trajet 3x mais ici décalé vers le bas de la figure 8, au sortir du cylindre 95, est d'abord dirigé par un miroir 31y selon la direction Ox, puis par un miroir 32y selon la direction Oy comme le montre la figure 7. Il pénètre ensuite dans l'optique de focalisation 35y.

Le trajet 3z est, au sortir du cylindre 95, parallèle au plan de la figure 8, et incliné par rapport à l'horizontale d'un angle sensiblement égal à 120°, et il se dirige vers le haut de la figure 8.

Il est ensuite dirigé vers le bas par un miroir 31z horizontal, comme le montre la figure 8. Ensuite, comme le montre la figure 6, et aussi la figure 9, il est dirigé par un miroir 32z selon la direction Oz. Il pénètre ensuite dans l'optique de focalisation 35z.

La figure 9 permet une vue globale des différents trajets 3x, 3y et 3z que peut emprunter le faisceau incident 3.

Sur la figure 4, on a représenté une variante du dispositif de la figure 3 pour laquelle les disques 91 et 92 ne sont plus les deux bases d'un unique cylindre 95, mais se supportent eux-mêmes. Cette forme de réalisation est un peu plus délicate, au plan mécanique, du fait que les secteurs réfléchissants doivent rester rigoureusement dans un même plan lorsqu'il tournent. Elle présente toutefois l'avantage d'offrir une meilleure séparation des trajets 3x et 3y, en ce sens que ceux-ci sont plus écartés que dans la réalisation de la figure 3. En effet, dans le cas de la figure 3, la réfraction à l'intérieur du cylindre 95 a tendance à rapprocher les trajets 3x et 3y.

Pour les mêmes raisons, dans le cas de la figure 3, il est préférable d'utiliser, comme matériau pour le cylindre 95, le séléniure de zinc, d'indice 2,4 plus faible que celui du germanium, qui vaut 4.

Naturellement, si l'anémomètre de l'invention s'avère particulièrement pratique dans la forme de réalisation qui vient d'être décrite, à trois directions de mesure, il est possible que, dans certaines applications, une forme de réalisation à deux dimensions soient suffisante. Dans ce cas, il est évidemment à la portée de l'homme du métier de modifier l'anémomètre qui vient d'être décrit à cet effet. Par exemple, il suffit de prévoir sur le disque 91 des secteurs 910 et 911 de 180° chacun, de prévoir une base 92 du cylindre 95 entièrement transparente, et de supprimer les miroirs 31x et 32x, et l'optique 35x pour obtenir un anémomètre à deux directions de mesure 3y et 3z.

De même, il n'est pas obligatoire d'utiliser, pour intercepter le faisceau incident 3, des disques à secteurs transparents et réfléchissants entraînés en rotation permanente, comme les disques 91 et 92. Ainsi, on pourrait utiliser tous autres dispositifs d'interception, par exemple des volets en partie transparents et en partie réfléchissants animés d'un mouvement oscillatoire permanent, à l'intérieur d'un plan fixe, pour alternativement réfléchir et laisser passer le faisceau, étant entendu que ce mouvement doit se produire perpendiculairement au faisceau, au point où celui-ci est intercepté.

Naturellement, lorsque le cylindre 95 est entraîné à 20 tours par seconde, on obtient l'ensemble des trois composantes de la vitesse tous les 1/20$^{ème}$ de seconde. Lorsqu'il n'est pas utile de connaître les variations de vitesse à un rythme aussi élevé, le cylindre 95 peut être entraîné à vitesse moins rapide.

## Revendications

1 - Anémomètre de mesure de la vitesse de déplacement d'un ensemble de particules (1x, 1y, 1z) en suspension dans l'air, comprenant :
– un laser (2) émettant un faisceau incident (3) sur lesdites particules (1x, 1y, 1z) qui le réfléchissent partiellement pour donner naissance à un faisceau réfléchi (4),
– des moyens (5) de mesure de l'écart de fréquence (ΔFi), induit par ladite vitesse, entre ledit faisceau réfléchi (4) et ledit faisceau incident (3), et,
– des moyens (9) pour faire varier la direction dudit faisceau incident (3),
anémomètre caractérisé par le fait que :
– lesdits moyens (9) pour faire varier la direction dudit faisceau incident comprennent des moyens (91, 92) d'interception dudit faisceau incident (3), en partie (910, 920) transparents, et en partie (911, 921) réfléchissants, entraînés en mouvement permanent pour se déplacer, dans un plan fixe, perpendiculairement audit faisceau incident (3) au point d'interception, ledit faisceau incident (3) empruntant en conséquence au moins deux trajets successifs (3z, 3y), et,

– il est prévu des moyens de commande (10) desdits moyens de mesure (5), et du mouvement desdits moyens d'interception (91, 92), pour que soit effectué au moins une mesure pendant que ledit faisceau incident (3) emprunte chacun desdits trajets successifs (3z, 3y).

2 - Anémomètre selon la revendication 1, dans lequel lesdits moyens d'interception comprennent au moins un premier disque (91) d'axe coupant l'axe dudit faisceau incident (3), ledit disque (91) étant entraîné en rotation permanente autour de son axe et pourvu d'au moins un premier secteur transparent (910) et d'au moins un premier secteur réfléchissant (911).

3 - Anémomètre selon la revendication 2, dans lequel ledit premier secteur transparent (910) est de 240°, ledit premier secteur réfléchissant (911) est de 120°, et il est prévu un deuxième disque (92) de même axe que ledit premier disque (91) et solidaire de celui-ci, interceptant ledit faisceau incident (3) après qui celui-ci a traversé ledit premier secteur transparent (910) et pourvu d'un deuxième secteur transparent (920) de 120° et d'un deuxième secteur réfléchissant (921) de 120° qui font face audit premier secteur transparent (910), ledit faisceau incident empruntant en conséquence trois trajets successifs (3z, 3x, 3y).

4 - Anémomètre selon la revendication 3, dans lequel lesdits premier (91) et deuxième (92) disques sont les deux bases d'un cylindre (95) en matériau transparent à la longueur d'onde dudit laser (2), lesdits premier (911) et deuxième (921) secteurs réfléchissants étant obtenus par dépôt d'une couche de matériau réfléchissant sur lesdites bases.

5 - Anémomètre selon la revendication 4, dans lequel lesdits premier (910) et deuxième (920) secteurs transparents ont subi un traitement anti-reflets.

6 - Anémomètre selon la revendication 4, dans lequel ledit laser (2) est un laser infra-rouge, et le matériau dudit cylindre (95) est du germanium ou du séléniure de zinc.

7 - Anémomètre selon l'une des revendications 1 à 6, dans lequel il est prévu des moyens réfléchissants (31x, 32x, 31y, 32y, 31z, 32z) sur chacun desdits trajets successifs (3x, 3y, 3z) du faisceau incident (3) pour diriger ceux-ci selon des directions orthogonales deux à deux.

## Patentansprüche

1. Anemometer zur Messung der Fortbewegungsgeschwindigkeit einer in der Luft schwebenden Einheit von Partikeln (1x, 1y, 1z), umfassend
– einen Laser (2), welcher ein auf die besagten Partikel (1x, 1y, 1z) auftreffendes Strahlenbündel (3) aussendet, das von diesen teilweise reflektiert wird, wodurch ein reflektiertes Strahlenbündel (4) entsteht,
– Mittel (5) zum Messen des von der besagten Geschwindigkeit induzierten Frequenzunterschiedes (Δ F$_l$) zwischen dem besagten reflektierten Bündel (4) und dem besagten auftreffenden Bündel (3) und
– Mittel (9) zur Richtungsänderung des besagten auftreffenden Bündels (3),
Anemometer dadurch gekennzeichnet, daß
– die besagten Mittel (9) zur Richtungsänderung des besagten auftreffenden Bündels Mittel (91, 92) zur Interception des besagten auftreffenden Bündels (3) umfassen, welche teilweise (910, 920) transparent und teilweise (911, 921) reflektierend sind und in ständiger Bewegung gehalten werden, um sich in einer bestimmten Ebene senkrecht zu dem besagten auftreffenden Bündel (3) am Interceptionspunkt zu bewegen, wodurch das genannte auftreffende Bündel (3) mindestens zwei aufeinanderfolgende Bahnen (3z, 3y) beschreibt und
– Mittel zum Steuern (10) der besagten Messungsmittel (5) und der Bewegung der besagten Interceptionsmittel (91,92) vorgesehen sind, damit mindestens eine Messung durchgeführt wird, während das besagte auftreffende Bündel (3) jede der besagten aufeinanderfolgenden Bahnen (3z, 3y) beschreibt.

2. Anemometer gemäß Anspruch 1, bei welchem die besagten Interceptionsmittel mindestens eine erste Scheibe (91) umfassen, mit einer Achse die die Achse des besagten auftreffenden Bündels (3) schneidet, wobei sich die besagte Scheibe (91) ständig um ihre Achse dreht und mindestens einen ersten transparenten Sektor (910) und mindestens einen ersten reflektierenden Sektor (911) aufweist.

3. Anemometer gemäß Anspruch 2, bei welchem der besagte erste transparente Sektor (910) 240° und der erste reflektierende Sektor (911) 120° beträgt und eine zweite Scheibe (92) auf derselben Achse wie die besagte erste Scheibe (91), mit welcher sie verbunden ist, vorgesehen ist, welche das besagte auftreffende Bündel (3) interceptiert, nachdem dieses durch den besagten ersten transparenten Sektor (910) gegangen ist und welche einen zweiten transparenten Sektor (920) von 120° und einen zweiten reflektierenden Sektor (921) von 120° aufweist, die dem besagten ersten transparenten Sektor (910) gegenüberliegen, wodurch das besagte auftreffende Bündel (3) drei aufeinanderfolgende Bahnen (3z, 3x, 3y) beschreibt.

4. Anemometer gemäß Anspruch 3, bei welchem die besagte erste (91) und zweite (92) Scheibe die zwei Basen eines Zylinders (95) aus transparentem Material mit der Wellenlänge des besagten Lasers (2) bilden, wobei der besagte erste (911) und zweite (921) reflektierende Sektor durch Auftragen einer Schicht reflektierenden Materials auf die besagten Basen gebildet werden.

5. Anemometer gemäß Anspruch 4, bei welchem der besagte erste (910) und zweite (920) transparente Sektor einer Antireflexbehandlung zugeführt wurden.

6. Anemometer gemäß Anspruch 4, bei welchem der besagte Laser (2) ein Infrarot-Laser ist und das Material des besagten Zylinders (95) aus Germanium oder Zinkselenid besteht.

7. Anemometer gemäß einem der Ansprüche 1 bis 6, bei welchem reflektierende Mittel (31x, 32x, 31y, 32y, 31z, 32z) auf jeder der besagten aufeinanderfolgenden Bahnen (3x, 3y, 3z) des auftreffenden Bündels (3) vorgesehen sind, um diese paarweise in orthogonaler Richtung zu lenken.

**Claims**

1. Anemometer for measuring the displacement speed of a group of particles (1x,1p,1z) in suspension in air, comprising :
   – a laser (2) emitting an incident beam (3) onto said particles (1x,1y,1z) which reflect it partially to give rise to a reflected beam (4) ;
   – means (5) for measuring the frequency deviation ( Fi), induced by said speed, between said reflected beam (4) and said incident beam (3), and
   – means (9) for varying the direction of said incident beam (3)
   anemometer characterized by the fact that :
   – said direction-varying means (9) comprise means (91,92) for intercepting said incident beam (3), partially (910,920) transparent and partially (911,921) reflecting, continuously moved into displacement, in a fixed plane, perpendicularly to said incident beam (3) at the point of interception, said incident beam (3) following thereby at least two successive paths (3z,3y) and
   – means (10) for controlling said measuring means (5) and the movement of said intercepting means (91,92) so that at least one measurement is made while said incident beam (3) follows each of said two successive paths (3z,3y).

2. Anemometer according to claim 1, wherein said intercepting means comprises at least a first disk (91) having an axis which intersects the axis of said incident beam (3), said disk (91) being driven in continuous rotation about its axis and being provided with at least a first transparent sector (910) and at least a first reflecting sector (911).

3. Anemometer according to claim 2, wherein said first transparent sector (910) is of 240°, said first reflecting sector (911) is of 120°, and a second disk (92) is provided which has the same axis as said first disk (91) and fast therewith, intercepting sad incident "beam (3) after the latter has passed through said first transparent sector (910) and having a second transparent sector (920) of 120° and a second reflecting sector (921) of 120° which face said first transparent sector (910), said incident beam consequently following three successive paths (3z,3x,3y).

4.  Anemometer according to claim , wherein said first (91) and second (92) disks are the two bases of a cylinder (95) made from a material transparent at the wavelength of said laser (2), said first (911) and second (921) reflecting sectors being obtained by depositing a reflecting material layer on said bases.

5.  Anemometer according to claim 4, wherein said first (910) and second (920) transparent sectors are provided with a flooming treatment.

6.  Anemometer according to claim 4, wherein said laser (2) is an infrared laser and the material of said cylinder (95) is germanium or zinc selenide.

7.  Apparatus according to one of claims 1 to 6, wherein reflecting means (31x,32x,31y,32y,31z,32z) are provided in each of said successive paths (3x,3y,3z) of the incident beam (3) for directing them into mutually orthogonal directions.

FIG.1

FIG.2

FIG.3

FIG.4

FIG.5

FIG. 6

FIG. 7

FIG.8

FIG.9